## Europäisches Patentamt
## European Patent Office
## Office européen des brevets

(19)

(11) Numéro de publication: **0 223 677**
**B1**

(12) # FASCICULE DE BREVET EUROPÉEN

(45) Date de publication du fascicule du brevet:
**10.08.88**

(51) Int. Cl.⁴: **F 22 B 37/24,** G 21 C 13/02

(21) Numéro de dépôt: **86402392.4**

(22) Date de dépôt: **24.10.86**

(54) **Dispositif de support de gros appareils à paroi mince.**

(30) Priorité: **29.10.85 FR 8516059**

(43) Date de publication de la demande:
**27.05.87 Bulletin 87/22**

(45) Mention de la délivrance du brevet:
**10.08.88 Bulletin 88/32**

(84) Etats contractants désignés:
**DE GB IT NL**

(56) Documents cité:
**DE-B-1 245 573**
**FR-A-765 964**
**FR-A-2 183 091**
**FR-A-2 547 392**

(73) Titulaire: **NOVATOME, Tour Fiat 1, place de la Coupole, F-92400 - Courbevoie (FR)**

(72) Inventeur: **Traiteur, René, 19, rue des Capucines, F-91130 Ris Orangis (FR)**
Inventeur: **Minguet, Jean- Luc, 3, Jardin Des Tilleuils, F-91190 - Saint- Aubin (FR)**

(74) Mandataire: **Moncheny, Michel, c/o Cabinet Lavoix 2 Place d'Estienne d'Orves, F-75441 Paris Cedex 09 (FR)**

EP 0 223 677 B1

## Description

La présente invention concerne un dispositif de support de gros appareils à paroi mince dont la température en service est élevée et variable.

Le support de gros appareils à paroi mince présente un certain nombre de difficultés, notamment dans le cas où ces appareils sont soumis à des températures importantes, ou à des variations de température rapides, ou bien encore si des efforts s'exercent sur eux par leurs liaisons à d'autres appareils.

En effet, leur dilatation radiale doit pouvoir se faire sans entraîner de contraintes sensibles dans leur structure, et il en est de même pour leurs déplacements éventuels dus aux liaisons.

Le renforcement de la paroi mince, autrement dit l'épaississement de ladite paroi au niveau des organes de support, n'est pas possible par suite des contraintes thermiques qui seraient engendrées lors des variations de température.

Ce problème se trouve particulièrement mis en évidence dans les générateurs de centrales nucléaires refroidis au sodium. Ces générateurs de vapeur sont constitués par exemple par quatre modules à tube droit comportant chacun une paroi mince qui forme son enveloppe extérieure dans laquelle circule le sodium d'échange. Ces modules sont supportés par des organes de liaison s'appuyant sur une structure fixe. Or, chacun de ces modules subit des contraintes provenant des chocs thermiques qui peuvent être importants, lors de variations rapides de temperature du sodium liquide. Ces sollicitations se traduisent notamment dans le cas de liaisons rigides entre la paroi mince et les organes supports, par des moments de renversement importants, si bien que l'emploi de telles liaisons est totalement incompatible avec les parois minces de l'appareil.

La présente invention à donc pour but de concevoir un dispositif de support autorisant une dilatation et un libre déplacement d'un appareil a paroi mince, en ne soumettant sa paroi qu'à des contraintes faibles, notamment par la réduction a des valeurs très faibles des moments de basculement qui s'y exercent, tout en permettant des variations de température rapides et importantes.

Dans ce but, la paroi mince de l'appareil à supporter est munie localement d'une bague annulaire relativement peu épaisse et comportant en partie médiane une gorge circulaire dans laquelle pénètre les extrémités de leviers de suspension articulés et régulièrement répartis autour de l'appareil, lesdits leviers de suspension étant d'une part munis du côté de la gorge de tourillons latéraux s'engageant dans des pièces encastrées dans ladite gorge et d'autre part suspendus chacun par un système à parallélogrammes en appui sur une structure fixe.

Afin de bien faire comprendre l'invention, on va maintenant décrire à titre d'exemple non limitatif, en se référant aux figures jointes en annexe, un mode de réalisation d'un dispositif de support suivant l'invention, destiné au supportage d'un générateur de vapeur de centrales nucléaires refroidi au sodium.

La figure 1 représente l'ensemble d'un générateur de vapeur à quatre modules à tube droit munis chacun du dispositif de suspension suivant l'invention.

La figure 2 est une demi-vue de dessus du dispositif de support conforme à l'invention.

La figure 3 est une vue en coupe suivant III-III de la figure 2.

La figure 4 est une vue à plus grande échelle en coupe suivant IV-IV de la figure 3.

La figure 5 est une vue en coupe suivant V-V de la figure 4.

La figure 6 est une vue en coupe suivant VI-VI de la figure.

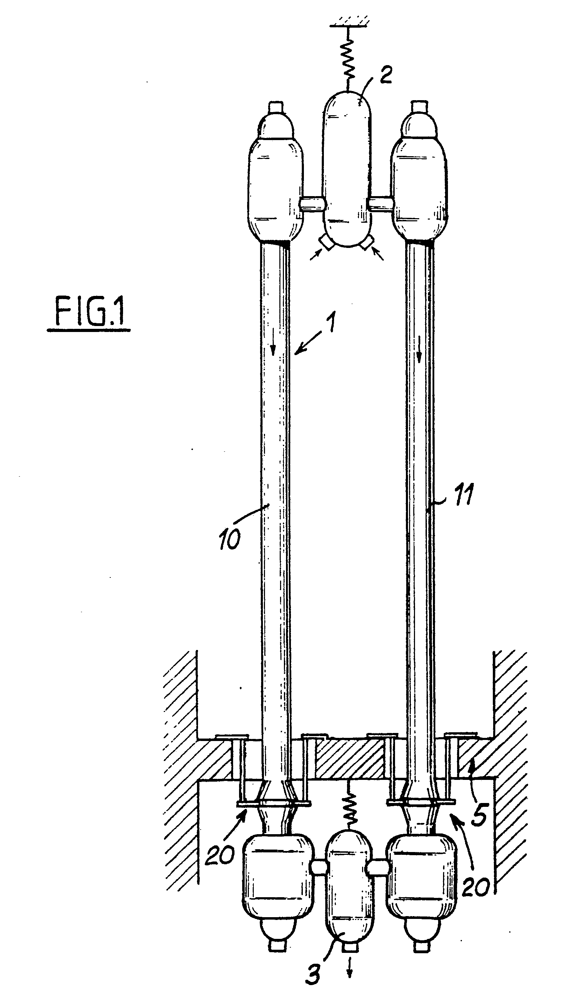

Sur la figure 1, on a représenté un générateur de vapeur désigné dans son ensemble par la référence 1 et constitué de plusieurs modules (10, 11, ...). Les modules sont par exemple au nombre de quatre.

Chaque module (10, 11, ...) est relié à sa partie haute à un réservoir 2 de répartition du sodium et à sa partie inférieure a un réservoir 3 de restitution du sodium. L'axe de ces réservoirs est considéré comme fixe.

Chaque module (10, 11, ... ) est supporté à sa partie inférieure par un dispositif de support 20 suivant l'invention. D'autres dispositifs, non représentés, mais connus, peuvent être prévus pour reprendre les efforts, spécialement dans des plans horizontaux, ce qui est le cas en particulier lors de séismes.

Comme on le verra ultérieurement, ce dispositif de support 20 est en appui sur une structure fixe 5 et il doit permettre, d'une part la libre dilatation de 1 enveloppe du module et son déplacement radial par rapport à l'axe des réservoirs 2 et 3 sous l'action des dilatations des liaisons entre le module et lesdits réservoirs.

Chaque module (10, 11,...) comporte une paroi mince (10a, 11a,...) qui forme son enveloppe extérieure dans laquelle circule le sodium d'échange. Cette enveloppe est entourée d'une gaine isolante 6.

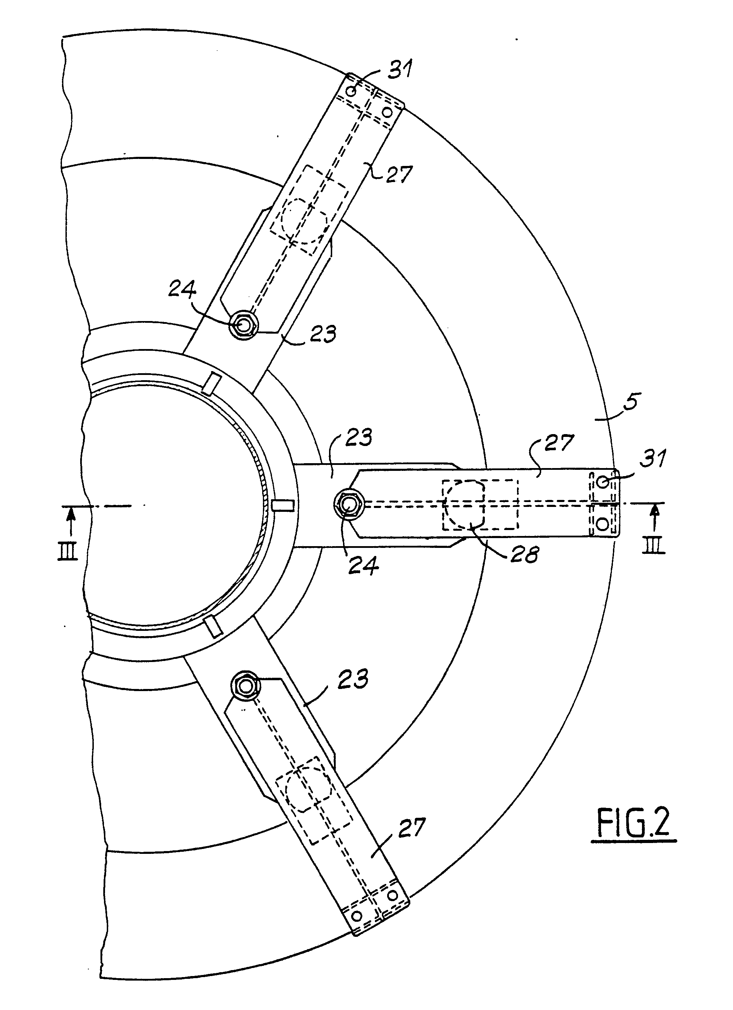

En se reportant maintenant aux figures 2 à 6, on va décrire plus en détail le dispositif de support 20 par exemple du module 10, le dispositif de support étant identique pour les autres modules.

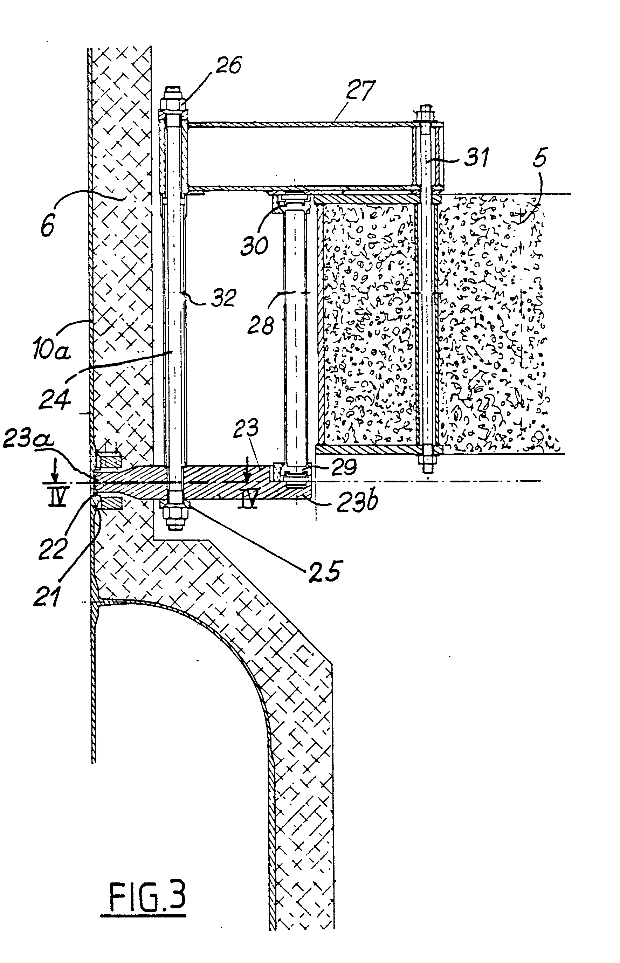

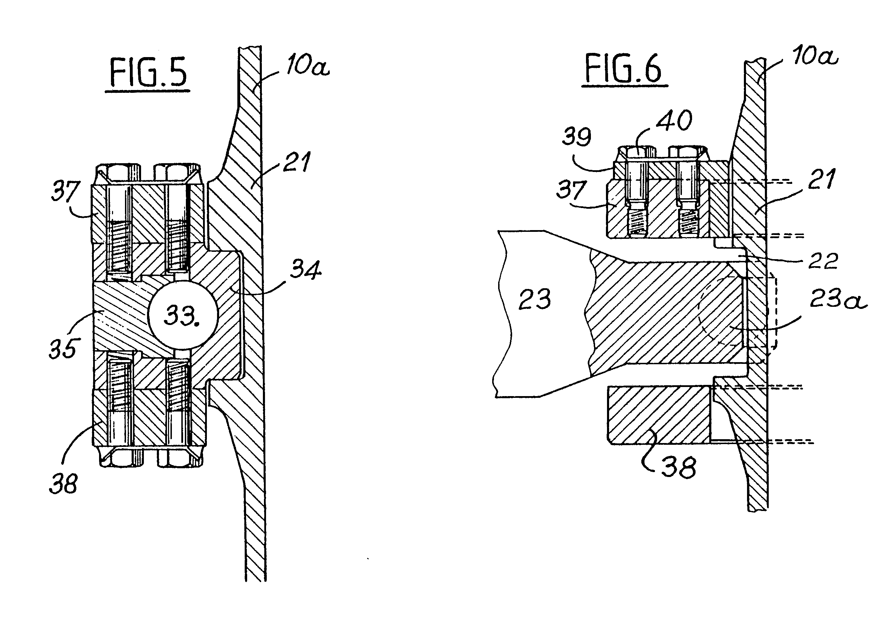

Au niveau du dispositif, de support 20, la paroi mince 10a est munie d'une bague annulaire 21 relativement peu épaisse et comportant en partie médiane une gorge circulaire 22 (figures 3 et 6). Dans cette gorge circulaire 22 viennent prendre place les extrémités 23a de plusieurs leviers horizontaux 23 uniformément répartis autour de l'enveloppe du module 10. Ces leviers horizontaux 23 sont équidistants les uns par rapport aux autres et sont par exemple au nombre de six (figure 2). L'extrémité 23a des leviers horizontaux 23 a une épaisseur inférieure à la hauteur de la gorge circulaire 22 de façon à permettre un léger pivotement vertical desdits leviers.

Chaque levier 23 est supporté en partie médiane par un long tirant 24 relié à une poutre 27 montée en porte-à-faux sur la structure fixe 5. Les liaisons 25 et 26 entre le long tirant 24 et le levier 23 d'une part et la poutre 27 d'autre part sont du type à rotule.

L'extrémité 23b de chacun des leviers 23 prend appui sur une béquille de compression 28 qui est montée sur la poutre 27. Les liaisons 29 et 30 entre la béquille 28 et le levier 23 et la poutre 27 sont également du type à rotule. La poutre 27 est fixée sur la structure fixe 5 par des tirants 31.

Chaque tirant 24 est monté dans un tube 32 placé entre le levier 23 et la poutre en porte-à-faux 27 de manière qu'en cas de soulèvement accidentel du module 10, le tirant 24 ne soit pas sollicité en compression, mais que l'effort de compression ainsi développé soit repris par le tube 32.

De même, la liaison de la béquille de compression 28 d'une part au levier 23, d'autre part à la poutre 27, est positive dans les deux sens puisque dans le cas de soulévement du module 10, la béquille de compression 28 travaille en traction.

L'ensemble constitué par le levier 23, la poutre 27, le tirant 24 et la béquille de compression 28 forme un système à parallélogramme qui autorise à la fois une dilatation radiale de la paroi mince 10a et un certain déplacement par rapport à l'axe des réservoirs 2 et 3 commun à plusieurs modules, ceci sans introduire de contraintes importantes.

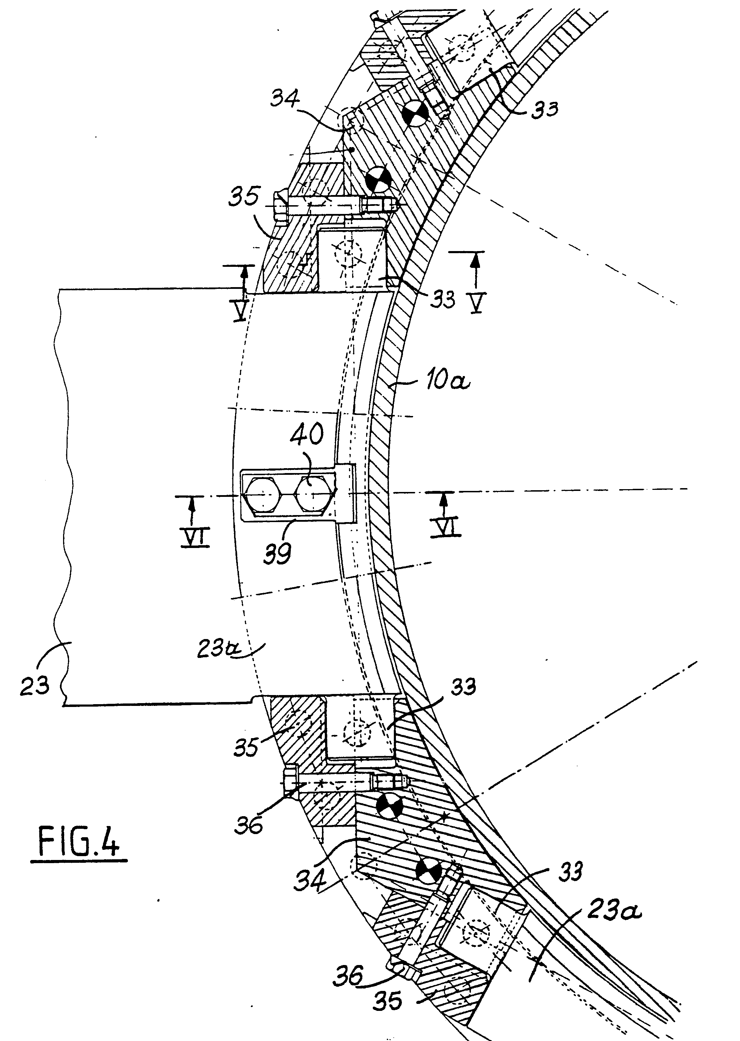

On voit sur la figure 4 que l'extrémité 23a de chaque levier 23 comporte sur chacune de ses faces latérales un tourillon 33 venant s'engager dans une pièce 34 qui est encastrée dans la gorge 22 de la bague annulaire 21. Les pièces 34 sont positionnées dans la gorge 22 entre les extrémités 23a des leviers 23 et reçoivent donc chacune un tourillon 33 de deux leviers 23 contigüs.

Afin de permettre le montage des tourillons 33 des leviers 23, les pièces 34 sont alésées d'un peu plus d'un demi-cylindre, la partie complémentaire hémicylindrique étant constituée par un chapeau 35 fixé sur ladite pièce 34 par une vis 36 (figures 4 et 5).

Les pièces 34 et les chapeaux 35 forment donc des paliers pour chaque levier 23 et c'est par l'intermédiaire de ces paliers que chaque module du générateur de vapeur porte sur les leviers de suspension 23.

De plus, les pièces 34 et les chapeaux 35 sont maintenus par deux anneaux circulaires 37 et 38 (figure 6) placés autour de 1 enveloppe du module et de part et d'autre des pièces 34 et des chapeaux 35.

Des clavettes 39 fixées par des vis 40 sur l'anneau supérieur 37 assurent une immobilisation en rotation des différents éléments entre eux.

Par ce dispositif de support, on constitue un ensemble continu articulé très rigide du point de vue reprise des efforts et en particulier des différents moments qui peuvent s'exercer sur les éléments de support. La paroi mince de l'enveloppe n'est soumise qu'aux efforts du poids de l'appareil et à un très petit moment correspondant à la distance du centre d'appui des pièces 34 dans la gorge circulaire 22 de la bague 21 à l'axe liant deux tourillons voisins 33. Par conséquent, les moments de basculement qui peuvent s'exercer sur l'appareil à supporter sont très faibles car la longueur du bras de levier - articulation des leviers de suspension - enveloppe est très petite.

La conception de ce dispositif permet aussi de régler facilement chacun des leviers de suspension en répartissant également les efforts sur chacun d'eux et en permettant un réglage de la verticabilité de l'ensemble par l'intermédiaire des tirants 24.

On voit que les principaux avantages du dispositif de support suivant l'invention sont que ce dispositif autorise une dilatation et un libre déplacement d'un appareil à paroi mince, en ne soumettant sa paroi qu'à des contraintes faibles, notamment par la réduction à des valeurs très faibles des moments de basculement qui s'y exercent, tout en permettant des variations de température rapides et importantes.

L'invention ne se limite pas au mode de réalisation qui vient d'être décrit; elle en comporte au contraire toutes les variantes.

C'est ainsi qu'au lieu de six leviers de suspension répartis à 60° sur le pourtour de l'enveloppe, on peut prévoir quatre leviers à 90° ou encore trois leviers à 120°.

Enfin le dispositif de support suivant l'invention s'applique dans tous les cas où l'on veut supporter des appareils à paroi mince qui peuvent être amenés à subir des températures variables entraînant des variations radiales et verticales de plus ou moins grandes amplitudes, en particulier pour des réservoirs de stockage ou tampon, des échangeurs divers... .

**Revendications**

1. Dispositif de support de gros appareils à paroi mince munis localement d'une bague annulaire (21) relativement peu épaisse et comportant en partie médiane une gorge circulaire (22), caractérisé par le fait qu'il comprend des leviers de suspension (23) articulés, régulièrement répartis autour de l'appareil, et pénétrant par l'une de leurs extrémités (23a) dans la gorge circulaire (22), lesdits leviers de suspension (23) étant d'une part munis du côté de la gorge (22) de tourillons latéraux (33) s'engageant dans des pièces (34) encastrées dans ladite gorge (22) et d'autre part suspendus chacun par un système à parallélogramme (24, 27, 28) en appui sur une structure fixe (5).

2. Dispositif de support selon la revendication 1, caractérisé par le fait que le système à parallélogramme de chaque levier est formé par une poutre (27) fixée en porte-à-faux sur la structure fixe (5) et supportant le levier par l'intermédiaire d'une part d'un tirant (24) monté sur la partie médiane du levier et d autre part d'une béquille (28) en appui sur l'extrémité (23b) dudit levier.

3. Dispositif de support selon la revendication 1, caractérisé par le fait que les pièces (34) encastrées dans la gorge (22) de la bague annulaire (21) sont immobilisées ensemble par deux anneaux (37, 38) situés de part et d'autre des leviers de suspension (23).

4. Dispositif selon la revendication 2, caractérisé par le fait que les tirants (24) sont entourés par un tube (32) qui leur évite un travail en compression si des efforts accidentels verticaux apparaissent et que la béquille (28) est à double effet compression-traction.

5. Dispositif selon l'une des revendications précédentes, caractérisé par le fait que les tirants (24) sont réglables en longueur pour permettre une répartition des efforts et un réglage de la verticalité.

6. Dispositif selon l'une des revendications précédentes, caractérisé par le fait que, pour chaque système à parallélogrammes, les liaisons (25, 26, 29, 30) entre la poutre (27), le levier (23), le tirant (24) et la béquille (28) sont du type à rotule.

7. Dispositif selon l'une des revendications précédentes, caractérisé par le fait que les extrémités (23a) des leviers (23) ont une épaisseur inférieure à la hauteur de la gorge circulaire (22).

8. Dispositif selon l'une des revendications précédentes, caractérisé par le fait que les leviers de suspension (23) sont au moins au nombre de trois.

**Claims**

1. Support device for large thin-wailed apparatus provided locally with a ring (21) which is of relatively slight thickness and has a circular groove (22) in its median portion, characterized by the fact that it comprises articulated suspension levers (23) regularly distributed around the apparatus and penetrating at one end (23a) into the circular groove (22), said suspension levers (23) being on the one hand provided at the end lying in the groove with lateral pivots (33) engaging in members (34) embedded in said groove (22), and on the other hand each being suspended by a parallelogram system (24, 27, 28) bearing against a fixed structure (5).

2. Support device according to Claim 1, charaterized by the fact that the parallelogram system of each lever is formed by a beam (27) cantilevered on the fixed structure (5) and supporting the lever on the one hand with the aid of a tie rod (24) mounted on the median part of the lever and on the other hand with the aid of a prop (28) bearing against the end (23b) of said lever.

3. Support device according to Claim 1, characterized by the fact that the members (34) embedded in the groove (22) in the ring (21) are locked together by two rings (37, 38) situated one on each side of the suspension levers (23).

4. Device according to Claim 2, characterized by the fact that the tie rods (24) are surrounded by a tube (32) which prevents them from being subjected to compressive stresses if accidental vertical loads occur, and that the prop (28) has a dual compressive-tensile action.

5. Device according to one of the preceding claims, characterized by the fact that the tie rods (24) are adjustable in length to permit distribution of loads and adjustment of verticality.

6. Device according to one of the preceding claims, characterized by the fact that for each parallelogram system the connections (25, 26, 29, 30) between the beam (27), the lever (23), the tie rod (24), and the prop (28) are of the ball and socket joint type.

7. Device according to one of the preceding claims, characterized by the fact that the ends (23a) of the levers (23) have a thickness less than the height of the circular groove (22).

8. Device according to one of the preceding claims, characterized by the fact that the suspension levers (23) are at least three in number.

**Patentansprüche**

1. Stützeinrichtung für große Apparate mit dünner Wand, die örtlich mit einem relativ dünnen Ring (21) versehen sind und im mittleren Bereich eine Ringnut (22) aufweisen, gekennzeichnet durch gelenkig gelagerte Aufhängungshebel (23), die gleichmäßig um das Gerät herum verteilt sind und mit einem ihrer Enden (21a) in die Ringnut (22) eingreifen, wobei die Aufhängungshebel (23) einerseits auf der Seite der Ringnut (22) mit seitlichen Lagerzapfen (33) versehen sind, die in in die Ringnut (22) eingesetzte Stücke (34) eingreifen und wobei die Aufhängungshebel andererseits jeweils über ein Parallelogrammsystem (24, 27, 28) aufgehangen sind, das auf einer festen Struktur (5) aufliegt.

2. Stützeinrichtung nach Anspruch 1, dadurch gekennzeichnet, daß das Parallelogrammsystem jedes Aufhängungshebels eine Stütze (27) aufweist, die freitragend auf der festen Struktur (5) befestigt ist und den Aufhängungshebel über einerseits einen Zug (24) trägt, der im mittleren Bereich des Hebels befestigt ist und andererseits über einen Stützfuß (28), der auf dem Ende (23b) des Hebels aufliegt.

3. Stützeinrichtung nach Anspruch 1 dadurch gekennzeichnet, daß die in die Nut (22) eingesetzten Stücke (34) des Rings (21) zusammen mittels zweier Ringe (37, 38) arretiert sind, die zu beiden Seiten des Aufhängungshebels (23) angeordnet sind.

4. Stützeinrichtung nach Anspruch 2,
dadurch gekennzeichnet,
daß die Züge (24) von einem Rohr (32) umgeben sind, das deren Kompression verhindert für den Fall, daß unvorhergesehene vertikale Kräfte auftreten und dadurch, daß der Stützfuß (28) sowohl bei Kompression als auch bei Zugbelastung wirksam ist.

5. Stützeinrichtung nach einem der vorstehenden Ansprüche, dadurch gekennzeichnet, daß die Züge (24) in ihrer Länge einstellbar sind, um eine Kräfteverteilung und eine Einstellung der Vertikalität zu ermöglichen.

6. Stützeinrichtung nach einem der vorstehneden Ansprüche,
daurch gekennzeichnet,
daß für jedes Parallelogrammsystem die Verbindung (25, 26, 29, 30) zwischen der Stütze (27), dem Hebel (23), dem Zug (24) und dem Stützfuß (28) als Kugelgelenke ausgelegt sind.

7. Stützeinrichtung nach einem der vorstehenden Ansprüche,
dadurch gekennzeichnet,
daß die Enden (23a) der Hebel (23) eine Dicke haben, die kleiner als die Höhe der Ringnut (22) ist.

8. Stützeinrichtung nach einem der vorstehenden Ansprüche,
dadurch gekennzeichnet ,
daß wenigstens drei Aufhängungshebel (23) vorgesehen sind.

FIG.1

FIG.2

FIG.3

0 223 677

FIG.4

FIG.5

FIG.6